# EUROPEAN PATENT APPLICATION

(11) **EP 3 929 097 A1**
(43) Date of publication of application: **29.12.2021**
(21) Application number: 20718358.3
(22) Date of filing: 18.02.2020
(51) Int. Cl.: B65D 5/22, B65D 5/66, B65D 5/54

(54) **SHIPPING CARTON AND METHOD FOR THE USE THEREOF**

(30) Priority: 18.02.2019 EP 19382109
(71) Applicant: Embalajes Capsa, S. L., 08360 Canet De Mar (Barcelona) (ES)
(72) Inventor: LÓPEZ CRESPO, Laura, Carmen, 08360 Camet de Mar (Barcelona) (ES); LÓPEZ MASAGUÉ, Manuel, 08360 Canet de Mar (Barcelona) (ES)
(74) Representative: Herrero & Asociados, S.L.
(86) International application number: PCT/ES2020/070112
(87) International publication number: WO 2020/169864

(57) **Abstract**

The shipping box comprises a bottom (1), side walls (2) and a lid (3), further comprising sealing means (4) for sealing the lid (3) and temporary closure means (6) for the temporary closure of said lid (3),said sealing means (4) and said temporary closure means (6) being positioned in said lid (3), wherein said lid (3) comprises a flap (8), the sealing means (4) and the temporary closure means (6) being arranged on said flap (8).

It is allowed to provide a shipping box with a double closure system (sealing and temporary closure) applicable to any type of box, since both sealing and temporary closure systems are positioned in a single flap of the lid.

## Description

The present invention relates to a shipping box, in particular a box for mailing objects. The present invention also relates to a method of using said shipping box.

### Background of the invention

Postal boxes are known in the market for sending small objects including an adhesive strip for sealing the box until it reaches its receiver. These boxes are not intended to remain functional after received, nor they can be closed by themselves before using the seal.

For example, there are boxes with a closure fin with arrowhead in addition to the adhesive tape protected by a protective strip. This design is used to secure closures since once used acting like a hook, it is necessary breaking it to open the box. This is because the width of the closure fin is greater than the length of the slot where it is housed.

Therefore, this type of boxes is designed to improve the inviolability of the closure and not to allow the temporary closure of the box, the latter being able to be opened and closed as many times as required and in a manner that prevents accidental opening. In addition, often, this fin interferes with the contents of the box, which could hinder its introduction depending on the characteristics and/or dimensions of such content.

Likewise, there are also known boxes with a lid and an adhesive tape protected by a protective strip, as well as a tear strip for subsequently opening the box, characterized in that the lid includes side tabs or flaps which are inserted into the box.

This box cannot be kept closed before shipping, since the side flaps, designed exclusively to improve the inviolability of the box, are not sufficient to close the box safely enough, for example, if the box were to be turned upside-down being filled, before or after shipping.

Moreover, in none of these cases, sellers advertise or mention the possibility of a double closure system for the boxes.

Therefore, it is an object of the present invention to provide a shipping box having a double closure option (called sealing and temporary closure) that allows opening and closing the box temporarily safely as many times as required, before and after its tamperproof closure sealing and shipping.

### Description of the invention

With the shipping box of the invention the aforesaid disadvantages are solved, presenting other advantages that will be described below.

The shipping box according to the present invention comprises a bottom, side walls and a lid, further comprising sealing means for sealing the lid, further comprising temporary closure means for the temporary closure of said lid.

Preferably, the sealing means are displaced towards the outside of the box relative to the temporary closure means.

Advantageously, said sealing means and said temporary closure means are positioned in said lid. Said cap comprises a flap, the sealing means and the temporary closure means being arranged on said flap.

This arrangement of the sealing means and the temporary closure means in a single flap of the lid allows to use said sealing means and temporary closure in any type of shipping box.

According to a preferred embodiment, said sealing means comprise an adhesive strip provided with a protective tape, and said temporary closure means comprise at least one tab housed at least in a complementary slot.

Said at least one tab advantageously comprises a folding line, and the width of said at least one tab is equal to or less than the length of said at least one complementary slot, preventing the tab from breaking after a first use, as is the casewhen the width of the tab is greater than the length of the slot.

In addition, the shipping box according to the present invention also comprises a tear strip, which is preferably placed between the sealing means and the temporary closure means.

According to one embodiment, said tear strip may be placed aligned with the temporary closure means.

According to a preferred embodiment, said lid also comprises an additional flap, and preferably said additional flap is disposed between the flap and one of the box side walls, or else is arranged hinged to a side wall opposite of said flap.

According to a possible embodiment, said temporary closure means comprise two side tabs which are housed in each in a complementary slot.

Preferably said at least one slot or said complementary slot(s) is (are) placed on the bottom of the box, but according to one embodiment, said complementary slots are arranged in the box additional flap.

If desired, said sealing means may comprise a second adhesive strip with a protective tape.

Advantageously, the box is formed from a single sheet of corrugated material comprising a plurality of parallel channels, for example, corrugated cardboard. Preferably, the parallel channels of corrugated material are perpendicular to the folding line of said at least one tab.

According to a second aspect, the present invention also relates to a method for the use of the shipping box as described above, comprising the steps of sealing the shipping box for shipping and temporarily close the shipping box, allowing the step of temporary closure of the shipping box to be made a plurality of times before and after the sealing step of the shipping box.

Therefore, the object of the present invention is to provide a shipping box with a double closure option, allowing both to maintain the box temporarily and safely closed, as well as to seal it permanently.

Moreover, since the adhesive tape is protected by a protective sheet, when removing said protective sheet, the sealing of the box is allowed at any time required. Thus, the sender does not need another box-sealing system outside of the box, e.g. a sealing device, strapping or other.

The presence of a tear strip facilitates the opening of the box for a receiver without using a cutting element or breaking the box by force. The option of temporary closure of the box securely as many times as required could be used both before and after using the option of permanent sealing by means of the adhesive strip protected by the protective sheet, thereby allowing the sender to keep the shipping box temporarily closed, for example, to prepare an order in several steps.

Also, once received the box and unsealed, for example, by means of the tear strip, the receiver can again keep the box safely closed, i.e., without being accidentally opened by itself, and open it as many times as required.

### Brief description of the drawings

For a better understanding of what has been exposed, some drawings are attached, wherein, schematically and only by way of non-limiting example, a practical case of embodiment is shown.
Figure 1 is a perspective view of a first embodiment of the shipping box of the present invention, in a position prior to assembly;
Figure 2 is a perspective view of the box of Figure 1 in its open position;
Figure 3 is a perspective view of the box of Figure 1 just before its temporary closure;
Figure 4 is a perspective view of the box of Figure 1 in its position of temporary closure;
Figure 5 is a perspective view of the box of Figure 1 just before sealing;
Figure 6 is a perspective view of the box of Figure 1 in its sealed position;
Figure 7 is a perspective view of the box of Figure 1 during its opening from its sealed position;
Figure 8 is a perspective view of the box of Figure 1 in its temporary closed position after a first seal and shipping;
Figure 9 is a perspective view of a second embodiment of the shipping box according to the present invention, in its open position;
Figure 10 is a perspective view of a third embodiment of the shipping box according to the present invention, in its open position;
Figure 11 is a perspective view of a fourth embodiment of the shipping box according to the present invention, in its open position;
Figure 12 is a perspective view of a fifth embodiment of the shipping box according to the present invention, in its open position;
Figure 13 is a perspective view of a sixth embodiment of the shipping box according to the present invention, in its open position;
Figure 14 is a perspective view of a seventh embodiment of the shipping box according to the present invention, in its open position;
Figure 15 is a perspective view of the shipping box of Figure 14 just before its temporary closure;
Figure 16 is a perspective view of an eighth embodiment of the shipping box according to the present invention, in its open position; and
Figure 17 is a perspective view of the shipping box in Figure 16 just before its temporary closure.

### Description of preferred embodiments

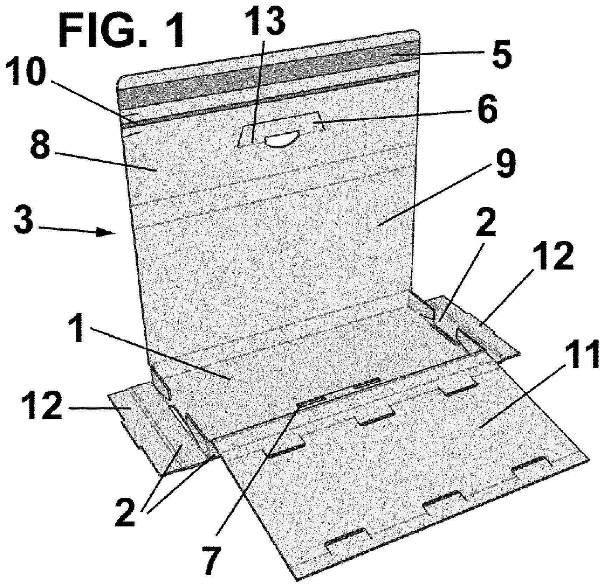

In Figures 1 to 8 it is shown a first embodiment of the shipping box according to the present invention.

This shipping box comprises a bottom 1, side walls 2 and a lid 3. According to the illustrated embodiment, the shipping box is formed from a single sheet of corrugated material, preferably corrugated cardboard. Said corrugated material comprises a plurality of channels parallel to each other.

The shipping box according to the present invention comprises sealing means and temporary closure means, which are preferably arranged in the lid 3.

It is noted that the temporary closure means close the box safely, i.e., preventing the accidental opening of the box, but also allowing to opening and closingita plurality of times according to the user's will.

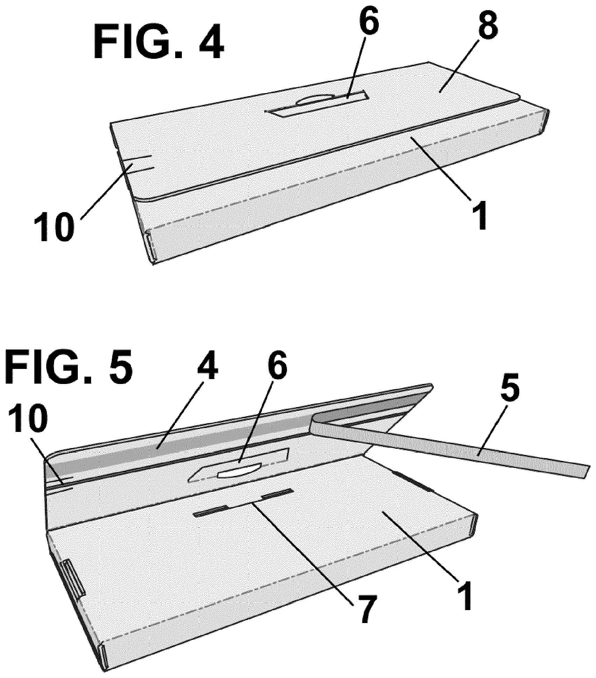

Said sealing means are formed by an adhesive strip 4 which can be seen in Figure 5, covered by a protective tape 5, removed before sealing the box.

Meanwhile, the temporary closure means comprise a tab 6 which is housed in a complementary slot 7, which in the embodiment shown is placed on the bottom 1 of the box. It is evident that said temporary closure means may comprise more than one tab which is housed in a corresponding number of complementary slots.

As shown in these figures, the sealing means 4 are displaced to the outside of the box relative to the temporary closure means 6.

To facilitate the introduction of the tab 6 into the slot 7, said tab 6 comprises a folding line 13, which allows putting together the tab 6 relative to the flap 8.

Advantageously, the width of said at least one tab 6 is equal to or less than the length of said at least one complementary slot 7, preventing the tab 6 from breaking after a first use.

Also, preferably the corrugated material channels are perpendicular to said folding line 13, reinforcing tab 6 to facilitate its use more than once.

This tab 6 does not interfere with the contents of the box when introduced into the additional slot 7.

The lid 3 of the shipping box according to the present invention comprises a flap 8 and an additional flap 9, which are divided by two folding lines allowing the closing of the box.

As shown in the figures, the sealing means (the adhesive strip covered by the protective tape 5) and the temporary closure means (the flap 6) are arranged in this flap 8.

In addition, to facilitate the opening of the box after its sealing, said flap 8 also comprises a tear strip 10, which is disposed between the sealing means and the temporary closure means, i.e., it is disposed between the adhesive strip 4 covered by the protective tape 5 and the tab 6.

As shown in Figure 1, the bottom 1 and side walls 2 have a double thickness for reinforcing, said double thickness formed from respective additional flaps (additional flap 11 of the bottom 1, and additional flaps 12 of the side walls 2).

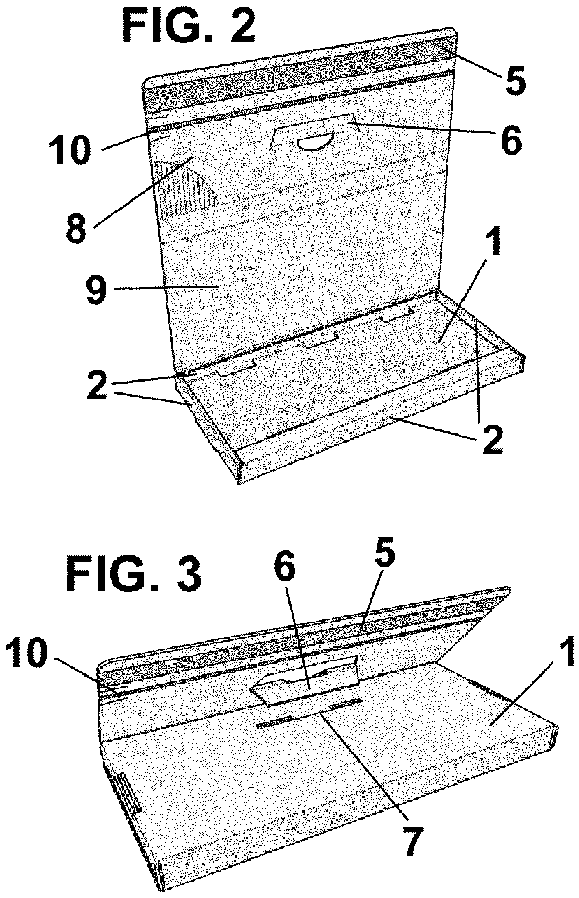

From the single sheet, the additional flaps 11 and 12 are folded on the bottom 1 and the side walls 2, respectively, leaving the box in the open position, shown in Figure 2.

To close the box temporarily, the lid 3 is placed on the bottom 1, so that the flap 8 remains on the bottom 1 and the additional flap 9 remains on the side of the box opposite to the bottom 1, so that the tab 6 is introduced into the slot 7, as shown in Figures 3 and 4. That is, this temporary closure may be performed before the sealing of the box, and in order to open the box it is just necessary to remove the tab 6 of the slot 7, which can be done as many times as required.

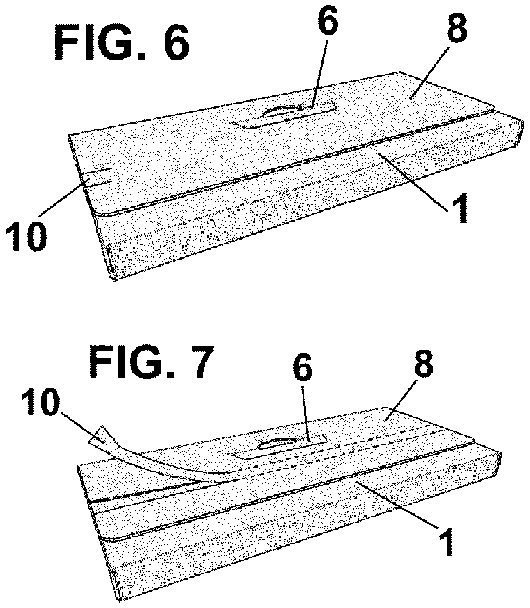

To seal the box the protective tape 5 must be removed (Figure 5), leaving bare the adhesive strip 4, which allows to fix the flap 8 to the bottom 1 of the box (Figure 6).

To open the sealed box the tear strip 10 is pulled (Figure 7) until it falls off entirely from the rest of the box. Thanks to the position of the tear strip 10, a portion of the flap 8 will remain fixed to the bottom 1 of the box, but the other side of the flap 8 will allow to open the box and reach its content.

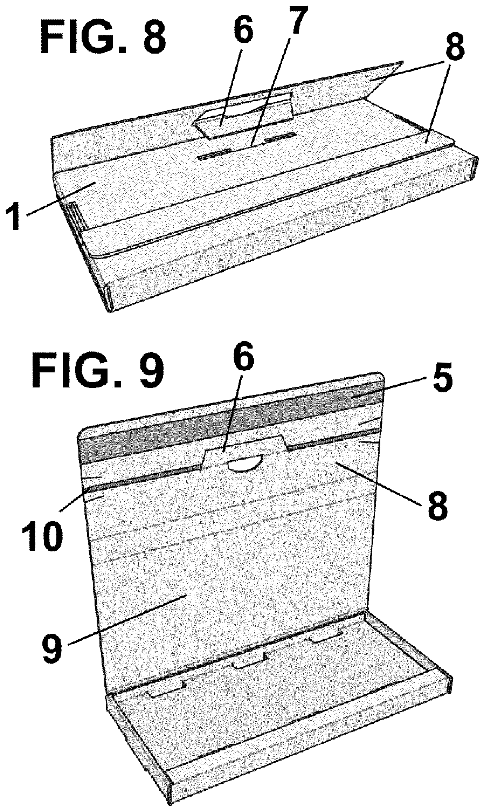

Since the tab 6 is positioned in this portion of the flap 8, the box may be temporarily closed as often as required after the sealing of the box (Figure 8).
In Figures 9 to 13 there are shown respective embodiments very similar to the first embodiment described.

For simplicity's sake only the differences will be described relative to said first embodiment and the same reference numerals are used to identify the same elements or equivalent elements.

In the second embodiment shown in Figure 9, the main difference is that the tear strip 10 is not positioned between the sealing means and the temporary closure means, but it is placed aligned with the temporary closure means, i.e. with the tab 6, in particular with the folding line 13 of the tab 6.

The use of this embodiment box is exactly like the use of the box according to the above embodiment.

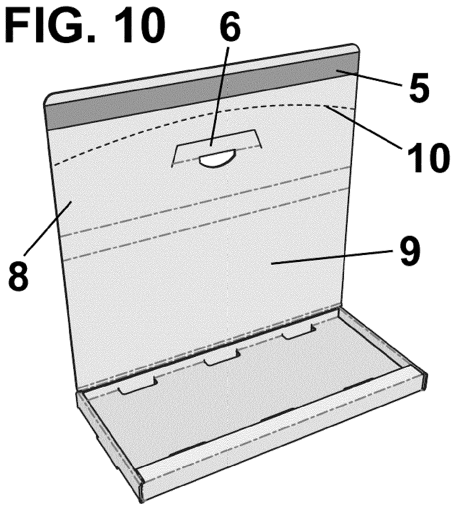

In the third embodiment shown in Figure 10, the main difference is that the tear strip 10 is a tear strip formed by a curved die-cut line located between the sealing means and the temporary closure means.

It is noted that it should be understood that the term "tear strip" includes any type of strip or line that allows the separation of a portion of the box, in particular a portion of the flap of the box, either a physical strip of any appropriate material or a die-cut line.

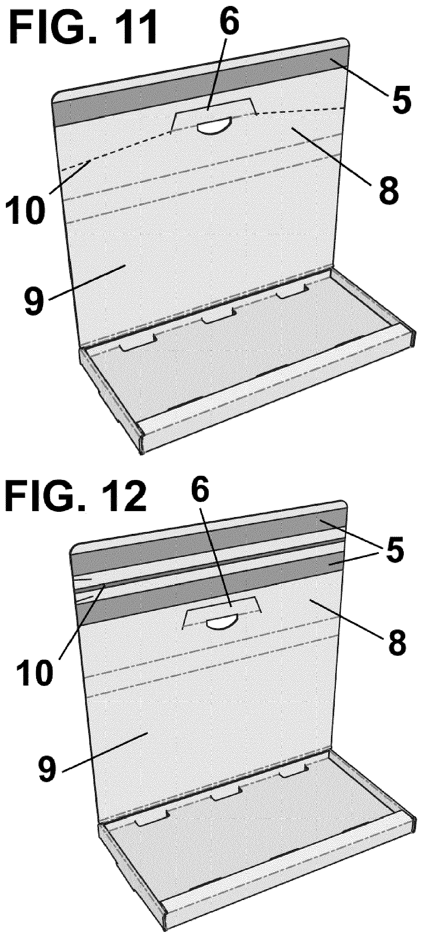

In the fourth embodiment shown in Figure 11, the main difference is that said tear strip 10 is a curved die-cut line, whose central portion is aligned with the folding line 13 of the tab.

In the fifth embodiment shown in Figure 12, the main difference from the first embodiment is the presence of second sealing means allowing to seal the box a second time. For example, these second sealing means are useful for returning a product shipped, without being necessary the use of an external sealing element. In this embodiment, the second sealing means are arranged between the tear strip 10 and the tab 6.

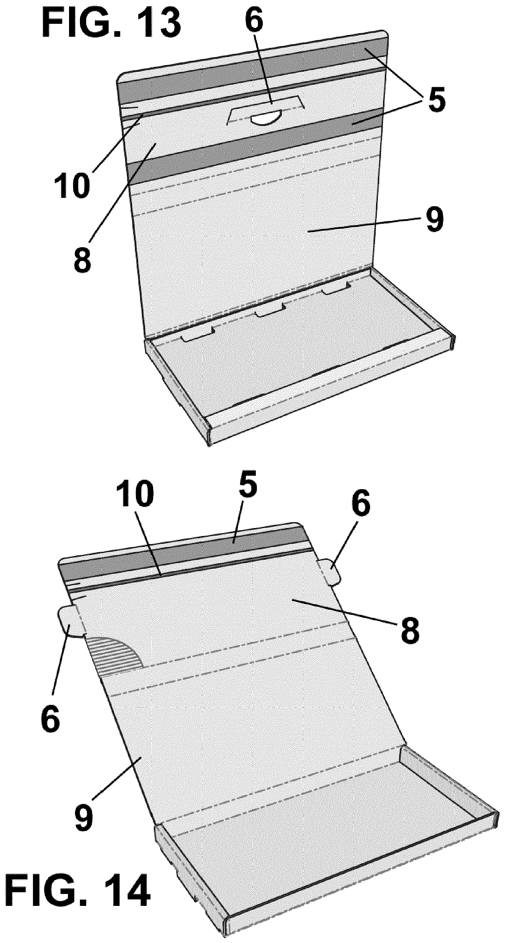

However, as shown in the sixth embodiment of Figure 13, said second sealing means may be arranged between the tab 6 and the folding line separating the flap 8 from the additional flap 9.

In these fifth and sixth embodiments, these second sealing means are also preferably formed by an adhesive strip 4 covered by a protective tape 5.

The use of these embodiments box is exactly like the use of the box according to the above embodiments, with the difference that the box can be sealed a second time, for example, for returning the product shipped.

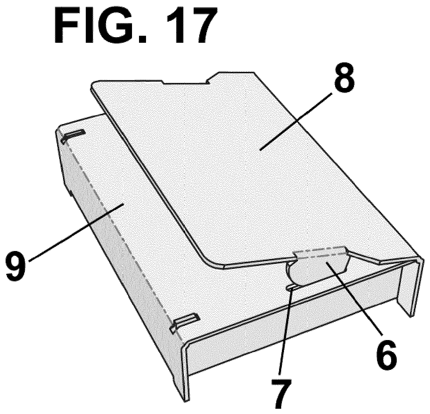

In Figures 14 to 17 two new embodiments are shown, the seventh and eighth embodiments, which have in common, and being a difference from previous embodiments, that the temporary closure means comprise two side tabs 6 instead of a central tab, as in the above embodiments.

Said side tabs 6 are arranged on the sides of said flap 8 of the lid 3.

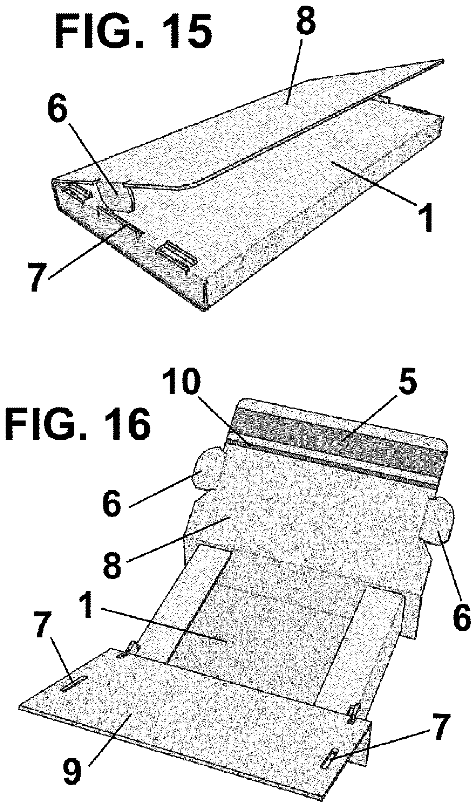

In the seventh embodiment, the side flaps 6 are housed in complementary slots 7 which are arranged on the bottom 1 of the box, as shown in Figure 15.

In the eighth embodiment, the additional flap 9 forming the lid 3 is not attached to the flap 8, but it is hinged to the opposite side wall, as shown in Figure 16.

Furthermore, in this embodiment, the complementary slots 7 are not arranged on the bottom 1 of the box, but they are arranged in said additional flap 9 of the lid 3. The use of these embodiments box is exactly like the use of the box according to the first embodiment.

Although it has been made reference to specific embodiments of the invention, it is apparent to one skilled in the art that the shipping box described is susceptible of numerous variations and modifications, and that all the details mentioned can be replaced by other technically equivalent without departing from the scope of protection defined by the appended claims.

## Claims

1. Shipping box, comprising a bottom (1), side walls (2) and a lid (3), further comprising sealing means (4) for sealing the lid (3) and temporary closure means (6) for the temporary closure of said lid (3),said sealing means (4) and said temporary closure means (6) being positioned in said lid (3), **characterized in that** said lid (3) comprises a flap (8), the sealing means (4) and the temporary closure means (6) being arranged on said flap (8).

2. Shipping box according to claim 1, wherein the sealing means (4) are displaced towards the outside of the box relative to the temporary closure means (6).

3. Shipping box according to claim 1 or 2, wherein said sealing means comprise an adhesive strip (4) provided with a protective tape (5).

4. Shipping box according to claim 1, wherein said temporary closure means comprise a least one tab (6) which is housed in at least a complementary slot (7).

5. Shipping box according to claim 4, wherein said at least one tab (6) comprises a folding line (13).

6. Shipping box according to claim 4, wherein the width of said at least one tab (6) is equal to or less than the length of said at least one complementary slot (7).

7. Shipping box according to claim 1, further comprising a tear strip (10).

8. Shipping box according to claim 7, wherein said tear strip (10) is positioned between the sealing means (4) and the temporary closure means (6).

9. Shipping box according to claim 7, wherein said tear strip (10) is aligned with the temporary closure means (6).

10. Shipping box according to claim 1, wherein said lid (3) also comprises an additional flap (9).

11. Shipping box according to claim 10, wherein said additional flap (9) is arranged between the flap (8) and one of the side walls (2) of the box.

12. Shipping box according to claim 4, wherein said temporary closure means comprise two side tabs (6) housed in each in a complementary slot (7).

13. Shipping box according to claim 4 or 12, wherein said at least one slot (7) or said complementary slots (7) is (are) placed on the bottom (1) of the box.

14. Shipping box according to claims 10 and 12, wherein said complementary slots (7) are placed in the additional flap (9) of the box.

15. Shipping box according to claim 3, wherein said sealing means comprise a second adhesive strip (4) with a protective tape (5).

16. Shipping box according to any one of the preceding claims, wherein the box is formed from a single sheet of corrugated material comprising a plurality of parallel channels.

17. Shipping box according to claims 5 and 16, wherein the parallel channels of the corrugated material are perpendicular relative to the folding line (13) of said at least one tab (6).

18. Method for use of the shipping box according to any one of the preceding claims, **characterized in that** it comprises the steps of sealing the shipping box for shipping and temporarily closing the shipping box, being able to perform the temporary closure step of the shipping box a plurality of times before and after the sealing step of the shipping box.
